# EUROPEAN PATENT APPLICATION

(11) **EP 2 322 981 A1**
(43) Date of publication of application: **18.05.2011**
(21) Application number: 09815979.1
(22) Date of filing: 01.07.2009
(51) Int. Cl.: G02F 1/13357, F21S 2/00, G02F 1/13, G02F 1/1334, G02F 1/1347, G09F 9/00, F21Y 101/02

(54) **LIGHT QUANTITY CONTROL DEVICE, BACKLIGHT UNIT, LIQUID CRYSTAL DISPLAY PANEL, AND LIQUID CRYSTAL DISPLAY DEVICE**

(30) Priority: 25.09.2008 JP 2008246492
(71) Applicant: Sharp Kabushiki Kaisha, Osaka-shi, Osaka 545-8522 (JP)
(72) Inventor: ISHIDA, Takeshi, Abenu-ku Osaka-shi Osaka 545-8522 (JP)
(74) Representative: Müller-Boré & Partner Patentanwälte
(86) International application number: PCT/JP2009/062058
(87) International publication number: WO 2010/035562

(57) **Abstract**

Disclosed is a liquid crystal unit (UT) comprising a first light transparent substrate (PB1) provided with a first transparent electrode (TE1) and a second light transparent substrate (PB2) provided with a second transparent electrode (TE2), a polymer-dispersed liquid crystal (11) being held between the first transparent electrode (TE1) and the second transparent electrode (TE2). In this liquid crystal unit (UT), LED (21) supplies light to the polymer-dispersed liquid crystal (11) through a space between the first transparent electrode (TE1) and the second transparent electrode (TE2).

## Description

### Technical Field

The present invention relates to a light quantity control device, a backlight unit, a liquid crystal display panel, and a liquid crystal display device.

### Background Art

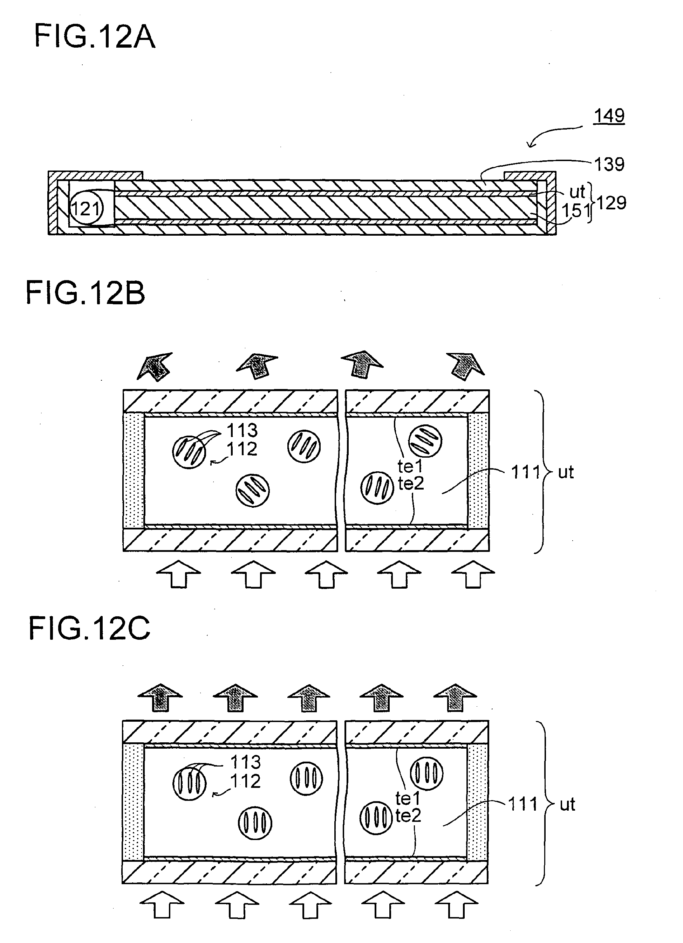

These days, there has been developed a backlight unit (a light quantity control device) 129 that is formed by, as shown in Fig. 12A, arranging a liquid crystal unit "ut" that is charged with polymer-dispersed liquid crystal 111 (see Figs. 12B and 12C) such that it covers a light guide plate 151 that receives light from a light source 121 to convert the received light to planar light (see Patent Document 1 listed below). In the liquid crystal unit "ut" of the above-structured backlight unit 129, the polymer-dispersed liquid crystal 111 is located between transparent electrodes te 1 and te2 as shown in Figs. 12B and 12C which are each an enlarged view of Fig. 12A.

A voltage is applied between the transparent electrodes te1 and te2, to thereby apply a voltage also to the polymer-dispersed liquid crystal 111. Liquid crystal 112 in the polymer-dispersed liquid crystal 111, that is, specifically, liquid crystal molecules 113 within the liquid crystal 112, as shown in Figs. 12B and 12C, behave differently according to voltages applied thereto (incidentally, in the figures, white arrows indicate light that enters the liquid crystal unit "ut", while black arrows indicate light that leaves the liquid crystal unit "ut").

That is, as shown in Fig. 12B, if the applied voltage is comparatively low (including a case of a zero voltage), the linear liquid crystal molecules 113 are non-uniformly (randomly) oriented, and diffuse (scatter) light from the light guide plate 151. On the other hand, as shown in Fig. 12C, if the applied voltage is comparatively high, the linear liquid crystal molecules 113 are uniformly oriented along one direction (an electric field direction), and do not diffuse light from the light guide plate 151.

These behaviors of light result in variation in quantity of light that passes through the liquid crystal unit "ut" to be outputted therefrom. Specifically, in a case in which only a comparatively low voltage is applied to the polymer-dispersed liquid crystal 111, light that enters the polymer-dispersed liquid crystal 111 is diffused by the liquid crystal molecules 113, and as a result, a small quantity of light is outputted toward a liquid crystal display panel 139 (see Fig. 12A). On the other hand, in a case in which a comparatively high voltage is applied to the polymer-dispersed liquid crystal 111, light that enters the polymer-dispersed liquid crystal 111 travels without being diffused by the liquid crystal molecules 113, and as a result, a large quantity of light is outputted toward a liquid crystal display panel 139.

This enables the backlight unit 129 to change brightness of light (backlight light) that is outputted therefrom without changing brightness (light quantity) of the light source 121.

### Prior Art Document

### Patent Document

Patent Document 1: JP-A-H07-311381

### Disclosure of the Invention

### Problems to be Solved by the Invention

However, in the backlight unit 129 structured as described above, light emitted from the light source 121 has to pass through the light guide plate 151 and the liquid crystal unit "ut". The more members light passes through, the larger quantity of the light is lost by the time when it reaches the liquid crystal display panel 139. Thus, light is not effectively used in the backlight unit 129 (and thus the liquid crystal display device 149).

The present invention has been made to solve the above problems, and an object of the present invention is to provide a light quantity control device (such as a backlight unit and a liquid crystal display panel) that is capable of making effective use of light, and an electronic device (such as a liquid crystal display device) provided therewith.

### Means for Solving the Problem

According to one aspect of the present invention, a light quantity control device includes: a first substrate including a first electrode to which a voltage is applied; a second substrate including a second electrode to which a voltage is applied; polymer-dispersed liquid crystal that is placed between the first electrode and the second electrode, and in which, in response to an increase of an applied voltage, liquid crystal molecules are made to be uniformly oriented along a direction of an electric field between the first electrode and the second electrode; and a light source that supplies light to the polymer-dispersed liquid crystal through a space between the first electrode and the second electrode.

With this structure, light enters the polymer-dispersed liquid crystal through the space between the first and second electrodes. As a result, if a comparatively high voltage is applied to the polymer-dispersed liquid crystal and thereby liquid crystal molecules are uniformly aligned along the direction of the electric field (that is, the direction in which the first and second electrodes are arranged parallel to each other), light enters the polymer-dispersed liquid crystal to be substantially perpendicular to the liquid crystal molecules. Then, most of the light passes through the liquid crystal molecules, and this makes it hard for the light to be outputted outward from, for example, the first substrate. On the other hand, if a comparatively low voltage (for example, a zero voltage) is applied to the polymer-dispersed liquid crystal and thereby the liquid crystal molecules are non-uniformly oriented, the light is diffused by the liquid crystal molecules. Then, it is easy for the diffused light to be outputted through, for example, the first substrate.

Thus, such a light quantity control device makes it possible to control the quantity of light that travels outward according to the level of a voltage applied to the polymer-dispersed liquid crystal. Furthermore, if such a light quantity device is built as a backlight unit incorporated in, for example, a liquid crystal display device, the main member that light from the light source passes through before it reaches the liquid crystal display panel is the polymer-dispersed liquid crystal alone. This means that the major cause of the loss of light from the light source is solely the polymer-dispersed liquid crystal. As a result, the light quantity control device having the above structure helps improve the efficiency of effective use of light (that is, the light quantity control device supplies light to the outside thereof while reducing loss of light).

According to the present invention, it is preferable that at least one of the first electrode and the second electrode include a plurality of electrode pieces that are arranged densely in a plane, and that the plurality of electrode pieces each individually have a voltage applied thereto.

With this structure, by applying different voltages to different ones of the electrode pieces, it is possible to apply different voltages to different portions of the polymer-dispersed liquid crystal that are each in contact with one of the electrode pieces. As a result, liquid crystal molecules are oriented differently at different electrode pieces, and accordingly different amounts of light is outputted through parts of, for example, the first substrate overlapping the different electrode pieces. That is, the quantity of planar light outputted from, for example, the first substrate is controlled on a basis of portion-by-portion of the plane.

According to the present invention, it is preferable that a voltage applied to the polymer-dispersed liquid crystal be higher toward the light source.

With this structure, in the polymer-dispersed liquid crystal, liquid crystal molecules located close to the light source are aligned along the electric field direction and diffuse only a small quantity of light. This helps prevent output of an excessive quantity of light from the portions of the polymer-dispersed liquid crystal that are located close to the light source. As a result, light outputted from the light quantity control device is uniformly bright.

According to the present invention, it is preferable that liquid crystal density with respect to polymer in the polymer-dispersed liquid crystal be lower toward the light source.

With this structure, only a small quantity of liquid crystal is included in a portion of the polymer-dispersed liquid crystal that is located closer to the light source, and thus a comparatively small quantity of light is diffused by the liquid crystal molecules. This helps prevent output of an excessively large quantity of light from the portions of the polymer-dispersed liquid crystal that are located close to the light source, and as a result, light outputted from the light quantity control device is uniformly bright.

Concrete examples of the light quantity control device include a backlight unit incorporated in a liquid crystal display device, a liquid crystal display panel, etc. The present invention can be said to include a liquid crystal display device provided with: a backlight unit built as the above-described light quantity control device; and a liquid crystal display panel that receives light from the backlight unit. In addition, the present invention can also be said to include a liquid crystal display device provided with a liquid crystal display panel having the structure of the above-described light quantity control device.

### Advantages of the Invention

According to the present invention, light from the light source passes mainly through the polymer-dispersed liquid crystal alone, and does not pass through any other additional members (such as a light guide plate) before it is outputted. This helps reduce loss of the light, and thus the light quantity control device and the like according to the present invention advantageously improve the efficiency of effective use of light.

### Brief Description of Drawings

[Fig. 1] A sectional view of a liquid crystal display device (taken along a sectional direction indicated by line A-A' and viewed from a direction indicated by an arrow shown in Fig. 2);
[Fig. 2] An exploded perspective view schematically showing a liquid crystal display device;
[Fig. 3] A sectional view showing liquid crystal display device including a polymer-dispersed liquid crystal to which a comparatively high voltage is applied;
[Fig. 4] A sectional view showing a liquid crystal display device including polymer-dispersed liquid crystal to which a comparatively low voltage is applied;
[Fig. 5] A sectional view showing a liquid crystal display device including part of polymer-dispersed liquid crystal to which a comparatively high voltage is applied and part of polymer-dispersed liquid crystal to which a comparatively low voltage is applied;
[Fig. 6] A sectional view showing a liquid crystal display panel in addition to a backlight unit shown in Fig. 5;
[Fig. 7] A sectional view showing a liquid crystal display device including a first transparent electrode formed in a sheet shape;
[Fig. 8] A sectional view showing a liquid crystal display device in which a voltage applied to one portion of polymer-dispersed liquid crystal is different from a voltage applied to another;
[Fig. 9] A sectional view showing a liquid crystal display device in which liquid crystal density in polymer-dispersed liquid crystal is such that the closer a portion of polymer-dispersed liquid crystal is to an LED, the lower the liquid crystal density is;
[Fig. 10] A sectional view showing a liquid crystal display device using a liquid crystal unit as a liquid crystal display panel;
[Fig. 11] A sectional view showing a dual-sided liquid crystal display device using a liquid crystal unit as a liquid crystal display panel;
[Fig. 12A] A sectional view showing a conventional liquid crystal display device;
[Fig. 12B] A sectional view showing a conventional liquid crystal display device including polymer-dispersed liquid crystal to which a comparatively low voltage is applied; and
[Fig. 12C] A sectional view showing a conventional liquid crystal display device including polymer-dispersed liquid crystal to which a comparatively high voltage is applied.

### Best Mode for Carrying Out the Invention

### [Embodiment 1]

Hereinafter, an embodiment of the present invention will be described with reference to the accompanying drawings. Hatching, a member itself, reference signs for members and the like may sometimes be omitted in a drawing for ease of description, and in such a case, a different drawing is to be referred to. A black dot in a drawing indicates a direction perpendicular to the sheet on which the drawing is drawn.

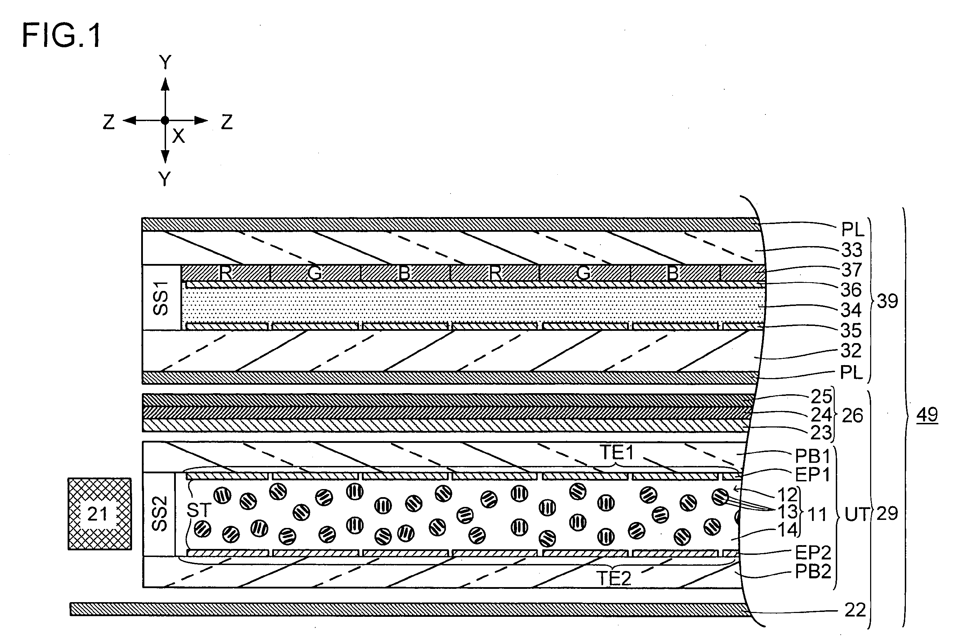

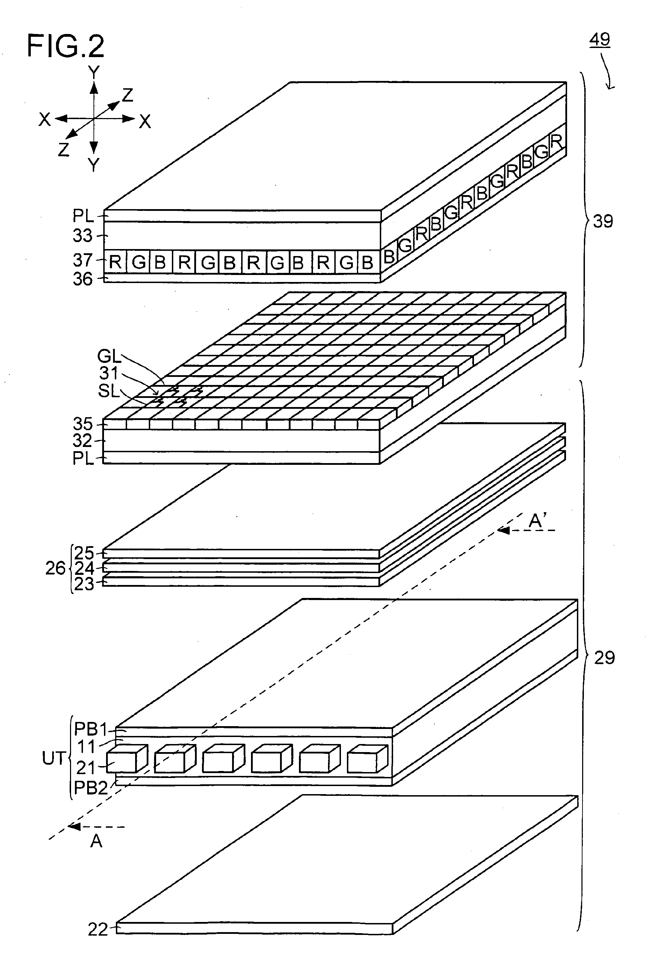

Fig. 1 is a sectional view of a liquid crystal display device 49, and Fig. 2 is an exploded perspective view schematically showing the liquid crystal display device 49 (taken along a sectional direction indicated by line A-A' and viewed from a direction indicated by an arrow shown in Fig. 2). As shown in these drawings, the liquid crystal display device 49 includes a liquid crystal display panel 39, and a backlight unit 29 that supplies light to the liquid crystal display panel 39 (incidentally, considering that the liquid crystal display panel 39 and the backlight unit 29 both control the quantity of outputted light, they can be called a light quantity control device; and the liquid crystal display device 49 provided with the liquid crystal display panel 39 and the backlight unit 29 can also be called a light quantity control device).

The liquid crystal display panel 39 adopts an active matrix method. Thus, in the liquid crystal display panel 39, liquid crystal 34 is located between two substrates, namely, an active matrix substrate 32 to which active elements (switching elements) such as TFTs (thin film transistors) 31 are fitted, and a counter substrate 33 that is opposed to the active matrix substrate 32. Thus, the active matrix substrate 32 and the counter substrate 33 are substrates for holding the liquid crystal 34 therebetween, and the substrates are formed of transparent glass or the like.

A seal member SS1 is fitted to peripheral portions of the active matrix substrate 32 and the counter substrate 33 to seal the liquid crystal 32 between the substrates. Furthermore, polarization films PL and PL are fitted to the active matrix substrate 32 and the counter substrate 33 so as to hold the substrates therebetween.

On a side of the active matrix substrate 32 that faces the counter substrate 33, gate signal lines GL, source signal lines SL, TFTs 31, and pixel electrodes 35 are formed as shown in Fig. 2.

The gate signal line GL is a line for transmitting a gate signal (a scan signal) that controls the ON/OFF state of the TFT 31, while the source signal line SL is a line for transmitting a source signal (an image signal) that is necessary for image display. The gate signal lines GL are aligned side by side in a direction, and the source signal lines SL are aligned side by side in another direction. Specifically, on the active matrix substrate 32, the gate signal lines GL that are aligned side by side intersect the source signal lines SL that are aligned side by side, such that a matrix pattern is formed by the gate signal lines GL and the source signal lines SL. Regions divided by the gate signal lines GL and the source signal lines SL correspond to pixels of the liquid crystal display panel 39.

Incidentally, a gate signal that is transmitted through a gate signal line GL is generated by a gate driver (not shown), and the source signal that is transmitted through a source signal line SL is generated by a source driver (not shown).

The TFTs 31 are arranged one at an intersection point of a gate signal line GL and a source signal line SL, to control the ON/OFF state of a corresponding one of the pixels of the liquid crystal display panel 39 (incidentally, only part of the TFTs 31 are illustrated for convenience's sake). That is, a TFT 31 controls the ON/OFF state of a pixel by a gate signal that is transmitted through a gate signal line GL.

The pixel electrodes 35, which are each an electrode connected to a drain of a TFT 31, are arranged corresponding to the pixels on a one-to-one basis (that is, the pixel electrodes 35 are laid in a matrix state all over the active matrix substrate 32). The pixel electrodes 35 and a common electrode 36, which will be described later, hold the liquid crystal 34 therebetween.

The common electrode 36 and a color filter 37 are formed on a side of the counter substrate 33 that faces the active matrix substrate 32.

The common electrode 36 is, in contrast to the pixel electrodes 35, arranged corresponding to a plurality of pixels (that is, the common electrode 36 has an area on the counter substrate 33 completely covering a plurality of pixels). The common electrode 36, together with the pixel electrodes 35, holds the liquid crystal 34 therebetween. With this structure, when a potential difference is generated between the common electrodes 36 and the pixel electrodes 35, the liquid crystal 34 controls its transmissivity by using the potential difference.

The color filter 37 is a filter that is interposed between the common electrode 36 and the counter substrate 33 to transmit light of a specific color. The color filter 37 is, for example, formed of color filters 37 that each transmits light of red (R), green (G) or blue (B), which colors are the light's three primary colors. The color filters 37 are arranged, for example, in stripes, in deltas, or in squares.

In the above-described liquid crystal display panel 39, when a TFT 31 is turned on by a gate signal voltage that is fed thereto via a gate signal line GL, a source signal voltage at a source signal line SL is fed to a pixel electrode 35 via a source and a drain of the TFT 31. Then, according to the source signal voltage, a voltage of the source signal is written onto a portion of the liquid crystal 34 that is located between the pixel electrode 35 and the common electrode 36, that is, the portion of the liquid crystal 34 corresponding to a pixel. On the other hand, when the TFT 31 is in an OFF state, the source signal voltage remains held by the liquid crystal and a capacitor (not shown).

Next, a description will be given of the backlight unit 29 that supplies light to the liquid crystal panel 39. The backlight unit 29 is placed so as to be covered with the liquid crystal display panel 39, and includes an LED (light emitting diode) 21, a liquid crystal unit UT, a reflection sheet 22, a diffusion sheet 23, and lens sheets 24 and 25.

The LED 21 is a light source, and includes a plurality of LEDs 21 that are arranged in a row. Specifically, the LEDs 21 are located on a side surface of the liquid crystal unit UT to be arranged in a row along the length direction of the side surface (incidentally, this direction, along which the LEDs 21 are arranged, will be referred to as a direction X). The LEDs 21 are arranged with light emitting ends thereof facing the liquid crystal unit UT, such that light emitted from the LEDs 21 enters the liquid crystal unit UT.

The liquid crystal unit UT is arranged to receive light and convert the received light into planar light, and includes a polymer-dispersed liquid crystal 11, a light-transmitting substrate PB, a seal member SS2, and a transparent electrode TE.

The polymer-dispersed liquid crystal 11 is a mixture formed by dispersing liquid crystal (liquid crystal droplets) 12 that is in the form of droplets in polymer 14 (incidentally, the liquid crystal 12 in the form of droplets is phase-separated in the polymer 14). In the polymer-dispersed liquid crystal 11, when a voltage is applied, a plurality of linear (stick-shaped) liquid crystal molecules 13 are aligned along one direction. As a result, orientation vectors of the liquid crystal molecules 13 are aligned along one direction. On the other hand, when no voltage (no electric field) is applied to the polymer-dispersed liquid crystal 11, the orientation vectors of the liquid crystal molecules 13 are oriented along various directions (that is, the polymer-dispersed liquid crystal 11 changes the orientation vectors of the liquid crystal molecules 13 according to a voltage applied thereto).

Incidentally, the linear liquid crystal molecules 13 are transparent, and each of them makes light that is incident thereon perpendicularly or substantially perpendicularly with respect to its orientation (that is, its orientation vector) proceed without being diffused. On the other hand, the linear liquid crystal molecules 13 diffuse light that is incident thereon obliquely with respect to the orientation thereof in various directions.

A first light-transmitting substrate PB1 and a second light-transmitting substrate PB2 are included in the light-transmitting substrate PB, and they are substrates made of a material such as glass that transmits light. The first and second light-transmitting substrates PB1 and PB2 hold the polymer-dispersed liquid crystal 11 therebetween.

The seal member SS2 is arranged at a periphery of a space between the first and second light-transmitting substrates PB 1 and PB2 that hold the polymer-dispersed liquid crystal 11 therebetween, to close the space. That is, the seal member SS2 seals the polymer-dispersed liquid crystal 11 in the space between the first and second light-transmitting substrates PB1 and PB2 that face each other. Incidentally, although there is no limitation to material of the seal member SS2, it is preferable that it is formed of a transparent material. This is because the seal member SS2 is located at side surfaces of the polymer-dispersed liquid crystal 11, and light is incident on the seal member SS2.

A first transparent electrode TE1 and a second transparent electrode TE2, which are included in the transparent electrode TE, are each a light-transmitting electrode formed of ITO (indium tin oxide) or the like, and applies a voltage to the polymer-dispersed liquid crystal 11. To achieve this, the first transparent electrode TE1 is fitted to a surface of the first light transmitting substrate (a first substrate) PB1 that faces the polymer-dispersed liquid crystal 11 while the second transparent electrode TE2 is fitted to a surface of the second light transmitting substrate (a second substrate) PB2 that faces the polymer-dispersed liquid crystal 11, and the transparent electrodes TE 1 and TE2 face each other.

That is, the first transparent electrode TE1 and the second transparent electrode TE2 are in contact with the polymer-dispersed liquid crystal 11 so as to hold it therebetween (thus, the polymer-dispersed liquid crystal has a layered structure, and can also be called a polymer-dispersed liquid crystal layer 11).

The first transparent electrode (the first electrode) TE1 includes a plurality of first transparent electrode pieces EP1 that are each formed in a thin shape, and the first transparent electrode pieces EP1 are densely arranged. Likewise, the second transparent electrode (the second electrode) TE2 includes a plurality of second transparent electrode pieces EP2 that are each formed in a thin shape, and the second transparent electrode pieces EP2 are densely arranged. The first transparent electrode pieces EP1 and the second transparent electrode pieces EP2 correspond to the pixels of the liquid crystal display panel 39 on a one-to-one basis (that is, a first transparent electrode piece EP1 is superposed on a second transparent electrode piece EP2, and further a pixel is superposed on the first transparent electrode piece EP1).

Thus, if the pixels are arranged in a matrix state, the closely-spaced first and second transparent electrodes pieces EP1 and EP2 are also arranged in a matrix state (incidentally, a first transparent electrode piece EP1 and a second transparent electrode piece EP2 that face each other as a set will also be referred to as an electrode-piece set ST).

In the above-described liquid crystal unit UT, light from the LEDs 21 is supplied to the polymer-dispersed liquid crystal 11 via the space between the first and second transparent electrodes TE1 and TE2. The light that enters the polymer-dispersed liquid crystal 11 is outputted as planar light from the liquid crystal unit UT (specifically, from the first light-transmitting substrate PB1), and a description as to how the light behaves will be described later in detail.

The reflection sheet 22 is covered with the second light-transmitting substrate PB2 in the liquid crystal unit UT. In the reflection sheet 22, a surface thereof that faces the second light-transmitting substrate PB2 is a reflection surface. Thus, the reflection surface reflects light that passes through the second light-transmitting substrate PB2 and that is liable to leak out of the liquid crystal unit UT, to thereby make the light travel back into the liquid crystal unit UT.

The diffusion sheet 23 covers the first light-transmitting substrate PB1 in the liquid crystal unit UT, and diffuses light (planar light) that is outputted from the liquid crystal unit UT to deliver the light all over the liquid crystal display panel 49 (incidentally, the diffusion sheet 23 and the lens sheets 24 and 25 will also be collectively referred to as an optical sheet group 26).

The lens sheets 24 and 25, each of which includes a prism-shaped portion within its sheet surface, are optical sheets arranged to narrow the directivity of light, and they are placed so as to cover the diffusion sheet 23. The optical sheets 24 and 25 collect light coming from the diffusion sheet 23, to increase brightness per unit area. It should be noted that the direction in which the light collected by the optical sheet 24 is diverged and the direction in which the light collected by the optical sheet 25 is diverged cross each other.

Incidentally, in the backlight unit 29, the reflection sheet 22, the liquid crystal unit UT, the diffusion sheet 23, the lens sheet 24, and the lens sheet 25 are superposed on each other in this order. Here, the superposition direction will be referred to as a direction Y. Furthermore, a direction that crosses the direction Y, and the direction X which is the arrangement direction of the LEDs 21, will be referred to as a direction Z (the directions X, Y and Z may be perpendicular to each other).

In a liquid crystal display device 69 provided with the above-described backlight unit 29 and the liquid crystal display panel 39, light from the LEDs 21 is outputted via the liquid crystal unit UT, and the outputted light passes through the optical sheet group 26 to be outputted as light (backlight light) having enhanced emission brightness. The backlight light reaches the liquid crystal display panel 39, which displays an image thereon by using the backlight light.

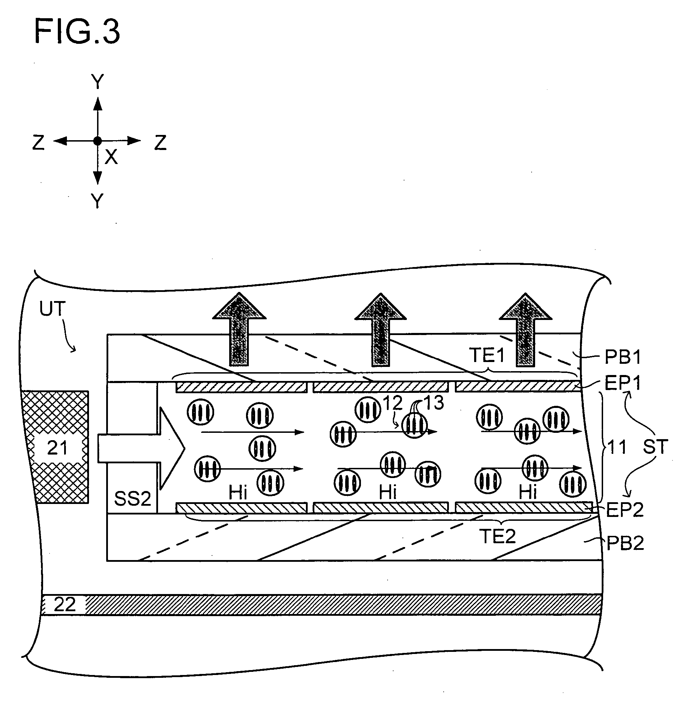

Now, with reference to the sectional views shown in Figs. 3 to 9, a detailed description will be given of light that the liquid crystal unit UT outputs. Specifically, a description will be given of how the difference in level of voltage that is applied to the polymer-dispersed liquid crystal 11 influences the way light travels after entering the polymer-dispersed liquid crystal 11.

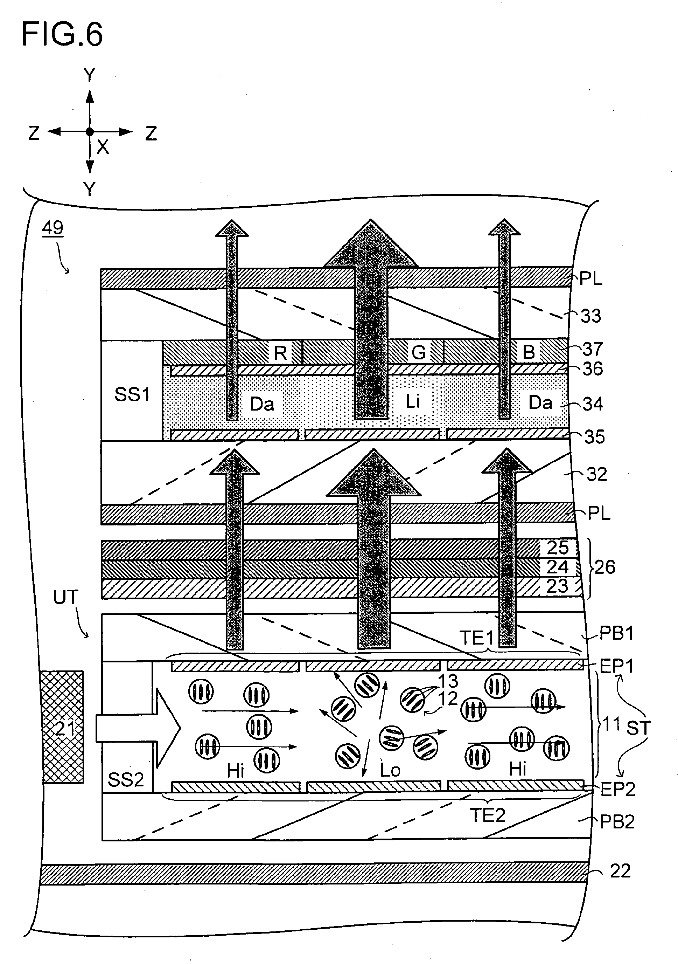

Incidentally, in these drawings, a voltage that is comparatively high will sometimes be indicated by "Hi" and a voltage that is comparatively low (including a zero voltage) will sometimes be indicated by "Lo". In these drawings, if necessary, the electrode-piece sets ST will be denoted with member numerals, for convenience's sake, such that, one that is located the closest to the LEDs 21 is denoted by ST1, one that is located the second closest to the LEDs 21 is denoted by ST2, and one that is located the third closest to the LEDs 21 is denoted by ST3. Furthermore, in Fig. 6, a portion of the liquid crystal 34 of the liquid crystal display panel 39 having a comparatively high transmissivity is indicated by "Li" and a portion having a comparatively low transmissivity is indicated by "Da".

For example, as shown in Fig. 3, when a comparatively high voltage is applied to opposite transparent electrodes TE1 and TE2 to cause a large potential difference between the first transparent electrode TE1 and the second transparent electrode TE2, a comparatively large voltage Hi is accordingly applied to the portion of the polymer-dispersed liquid crystal 11 located between the transparent electrodes TE1 and TE2, and the liquid crystal molecules 13 are oriented along one direction in accordance with the increase of the voltage applied to the polymer-dispersed liquid crystal 11.

Specifically, the higher the voltage applied to the polymer-dispersed liquid crystal 11 is (that is, in proportion to the voltage applied to the polymer-dispersed liquid crystal 11), the orientation of the liquid crystal molecules 13 is more along the direction of the electric field generated in the polymer-dispersed liquid crystal 11. Thus, the liquid crystal molecules 13 are aligned along the electric-field direction which is a direction from the first transparent electrode TE1 to the second transparent electrode TE2 (the direction (the same direction as the direction Y) in which the first transparent electrode TE1 and the second transparent electrode TE2 are arranged parallel to each other.

Light (see an outline arrow) from the LEDs 21 enters the above-described polymer-dispersed liquid crystal 11 from a side surface thereof, that is, from the space between the first and second transparent electrodes TE1 and TE2. Then, the light is mostly incident on the liquid crystal molecules 13, which are uniformly oriented along the electric-field direction, substantially perpendicularly with respect to the liquid crystal molecules 13, to be further transmitted through the liquid crystal molecules 13, and as a result, the light mostly proceeds without being diffused (see the solid line arrows).

If the light from the LEDs 21 is not diffused, output of a large quantity of light outward from the first light-transmitting substrate PB 1 is prevented (and accordingly, output of a large quantity of light from the second transparent substrate PB2 toward the reflection sheet 22 is also prevented). Thus, only a small quantity of light is outputted outward from the first light-transmitting substrate PB1 to reach the diffusion sheet 23 (see a black arrow).

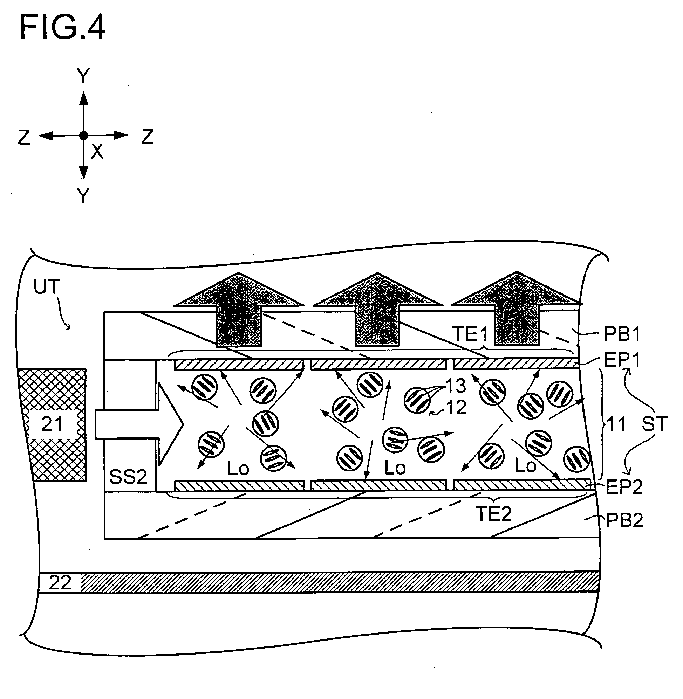

On the other hand, as shown in Fig. 4, if no voltage, or a comparatively low voltage that is almost as low as a zero voltage, is applied to the transparent electrodes TE1 and TE2 that face each other, and accordingly only a small potential is generated between the first transparent electrode TE1 and the second transparent electrode TE2, then only a comparatively low voltage Lo is applied to the polymer-dispersed liquid crystal 11 which is located between the transparent electrodes TE1 and TE2, and according to the applied voltage (which may possibly be a zero voltage), the liquid crystal molecules 13 are oriented not uniformly but irregularly (randomly).

When light from the LEDs 21 (see an outline arrow) enters the polymer-dispersed liquid crystal 11 from a side surface, most part of the light is obliquely incident on the randomly aligned liquid crystal molecules 13 to be diffused (see solid line arrows). Then, as a result of the diffusion of light, a large quantity of light (see a black arrow) is outputted outward from the first light-transmitting substrate PB1. Thus, a comparatively large quantity of light reaches from the first light-transmitting substrate PB1 to the diffusion sheet 23.

Incidentally, part of light diffused by the liquid crystal molecules 13 is outputted from the second light-transmitting substrate PB2 toward the reflection sheet 22 to be reflected, but by being thus reflected by the reflection sheet 22, the part of light returns to the liquid crystal unit UT via the second light-transmitting substrate PB2, passes through the first light-transmitting substrate PB1, and proceeds to the diffusion sheet 23.

In light of the foregoing, the following can be said: First, the backlight unit 29 supplies light to the polymer-dispersed liquid crystal 11 in which the liquid crystal molecules 13 are oriented along the electric field direction in response to an increase in applied voltage at a comparatively high ratio. In particular, the backlight unit 29 makes light travel substantially perpendicularly to the electric field direction.

Then, when a comparatively high voltage is being applied to the polymer-dispersed liquid crystal 11, light that enters the polymer-dispersed liquid crystal 11 is not diffused by the regularly oriented liquid crystal molecules 13, and this reduces the likelihood of the light being outputted to the outside. On the other hand, if no voltage, or a comparatively low voltage, is applied to the polymer-dispersed liquid crystal 11, light that enters the polymer-dispersed liquid crystal 11 is diffused by the randomly aligned liquid crystal molecules 13, and this increases the likelihood of the light being outputted to the outside. Thus, the thus-featured backlight unit 29 makes it possible to control the quantity of light that travels outward from the liquid crystal unit UT according to the level of the voltage applied to the polymer-dispersed liquid crystal 11.

Furthermore, members through which light from the LEDs 21 passes to reach the liquid crystal display panel 39 are the liquid crystal unit UT and the optical sheet group 26, and thus the light does not have to pass through a light guide plate (the liquid crystal unit UT is the main member through which the light passes). This helps reduce the quantity of light from LEDs 21 that is lost by the time the light reaches the liquid crystal display panel 39 (in short, loss of light is reduced corresponding to the reduction of the number of members through which the light passes). As a result, the thus-featured backlight unit 29, and thus the liquid crystal display device 49, helps improve the efficiency of effective use of light.

In addition, in the backlight unit 29 as described above, light from the liquid crystal unit UT passes through the optical sheet group 26 after its quantity is adjusted to a required light quantity. As a result, diffusion of light is appropriately performed and brightness is appropriately enhanced at the optical sheet group 26.

For example, no situation arises in which light is excessively diffused by the diffusion sheet 23, or no situation arises in which light is collected by the lens sheets 24 and 25 so insufficiently as to result in insufficient brightness. That is, the adjustment of the quantity of light from the liquid crystal unit UT makes it possible to achieve appropriate and effective use of light at the backlight unit 29.

Furthermore, since the backlight unit 29 includes a plurality of electrode-piece sets ST each including a first transparent electrode piece EP1 and a second transparent electrode piece EP2 that face each other, if different voltages are applied to different ones of the electrode-piece sets ST, light is accordingly outputted in different quantities from different portions of the surface of the first light-transmitting substrate PB1 in the liquid crystal unit UT that correspond to the different ones of the electrode-piece sets ST. Thus, as shown in Figs. 3 and 4, the voltages applied to the polymer-dispersed liquid crystal 11 located between all the electrode-piece sets ST do not need to be uniform.

For example, in the case in which the electrode-piece sets ST are arranged in a matrix state, different voltages may be applied to adjacent ones of the electrode-piece sets ST. That is, in the polymer-dispersed liquid crystal 11 that is divided in a matrix state according to the electrode-piece sets ST, part of the thus-divided polymer-dispersed liquid crystal 11 and another part of the thus-divided polymer-dispersed liquid crystal 11 may be fed with voltages that are different from each other.

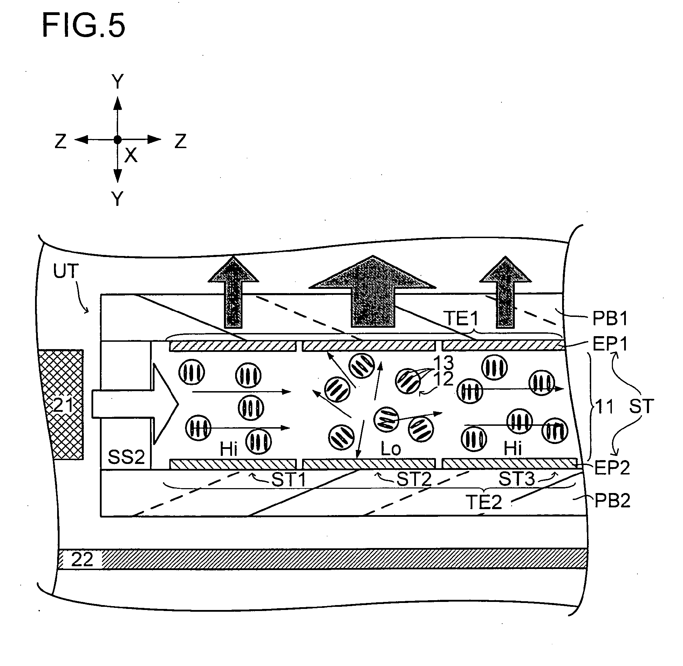

For example, assume that, as shown in Fig. 5, with respect to each two adjacent ones of the electrode-piece sets ST, a comparatively high voltage is applied to one of the electrode-piece sets ST, and a comparatively low voltage is applied to the other one of the electrode-piece sets ST (for example an approximately zero voltage). In particular, assume that a comparatively high voltage is applied to the electrode-piece set ST1 that is located the closest to the LEDs 21. Then, light from the LEDs 21 first reaches the portion of the polymer-dispersed liquid crystal 11 that is located between an electrode-piece set ST1 to which a comparatively high voltage is applied (see an outline arrow).

In this portion of the polymer-dispersed liquid crystal 11, the liquid crystal molecules 13 are oriented along the direction of an electric field generated between the first transparent electrode TE1 and the second transparent electrode TE2. Thus, most part of light that reaches the polymer-dispersed liquid crystal 11 is approximately perpendicularly incident on, and further passes through, the linear liquid crystal molecules 13; thus the light is not diffused much and proceeds to the portion of the polymer-dispersed liquid crystal 11 that is located between the electrode-piece set ST2 (see solid line arrows). As a result, a comparatively small quantity of light is outputted outward from the portion of the polymer-dispersed liquid crystal 11 that is located between the electrode-piece set ST1 via the first light-transmitting substrate PB 1 (see a black arrow).

On the other hand, the voltage applied to the electrode-piece set ST2 is lower than the voltage applied to the first electrode-piece set ST1. Thus, in the portion of the polymer-dispersed liquid crystal 11 that is located between the electrode-piece set ST2, the linear liquid crystal molecules 13 are randomly oriented. In this state, most of the light that reaches the portion of the polymer-dispersed liquid crystal 11 that is located between the electrode-piece set ST2 is obliquely incident on the linear liquid crystal molecules 13 to be reflected to be diffused thereby (see solid line arrows). As a result, a comparatively large quantity of light is outputted outward from the portion of the polymer-dispersed liquid crystal 11 that is located between the electrode-piece set ST2 via the first light-transmitting substrate PB1 (see a black arrow).

Incidentally, part of the light does reach, from the portion of the polymer-dispersed liquid crystal 11 that is located between the electrode-piece set ST2, a portion of the polymer-dispersed liquid crystal 11 that is located between the electrode-piece set ST3. Such light is also outputted to the outside via the first light-transmitting substrate PB1 depending on the voltage applied to the electrode-piece set ST3 between which is located the portion of the polymer-dispersed liquid crystal 11 that the light reaches.

That is, as shown in Fig. 5, if the voltage applied to the electrode-piece set ST3 is a comparatively high voltage, only a small quantity of the light (see a black arrow) is outputted, and most part of the light (see solid line arrows) proceeds to a portion of the polymer-dispersed liquid crystal 11 that is located between an electrode-piece set ST that is located adjacent to the electrode-piece set ST3 (the electrode-piece set ST is located adjacent to the electrode-piece set ST3 and farther away from the LEDs 21 than the electrode-piece set ST3 is).

In light of the foregoing, in the backlight unit 29 including the liquid crystal unit UT having the plurality of electrode-piece sets ST that are densely arranged in a plane, if different voltages are applied to different ones of the electrode-piece sets ST, light is accordingly outputted in different quantities from different portions of the surface of the first light-transmitting substrate PB1 that correspond to the different ones of the electrode-piece sets ST. That is, the light quantity of planar light outputted from the backlight unit 29 is controlled portion-by-portion of the plane (that is, the backlight unit 29 is built as a so-called area-control backlight unit).

Thus, in the liquid crystal display device 49 incorporating the thus-structured backlight unit 29, it is possible to control brightness on a pixel-by-pixel (area-by-area) basis not only in the liquid crystal display panel 39 but also in the backlight unit 29.

For example, as shown in Fig. 6, in the liquid crystal 34 of the liquid crystal display panel 39, it is preferable that a comparatively small quantity of backlight light reach a portion Da having a comparatively low transmissivity while a comparatively large quantity of backlight light reach a portion Li having a comparatively high transmissivity. This makes it easy to control the brightness while reducing loss of light.

Thus, in comparison with a case in which brightness control is performed only at the liquid crystal display panel 39, the liquid crystal display device 49 with the above-described features is capable of performing brightness control of higher quality (for example, capable of realizing a more improved contrast ratio), and thus providing higher-quality images having higher visibility.

In the above descriptions, the first transparent electrode TE1 is formed of the densely-arranged first transparent electrode pieces EP1, and the second transparent electrode TE2 is formed of the densely-arranged second transparent electrode pieces EP2. That is, the transparent electrodes TE1 and TE2 are formed of densely arranged transparent electrode pieces EP1 and EP2, respectively. This, however, is not meant as a limitation.

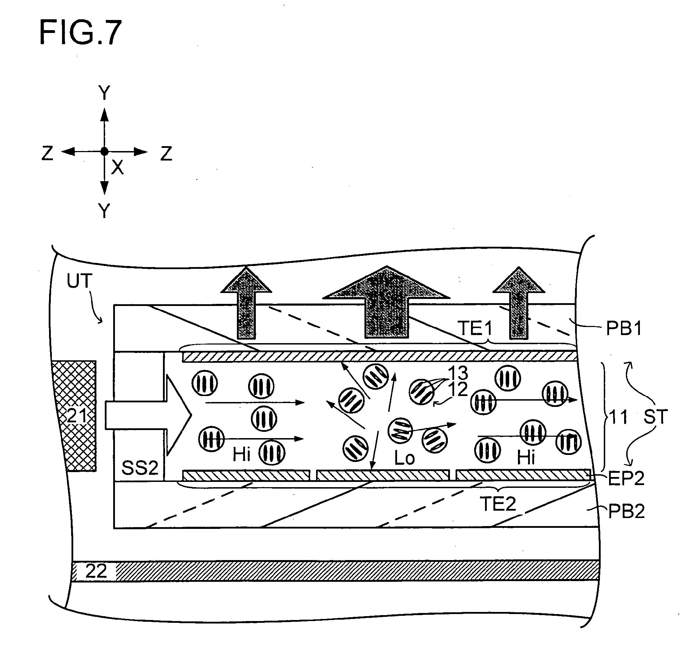

For example, the structure may be such that only one of the first transparent electrode TE1 and the second transparent electrode TE2 is formed of a plurality of transparent electrode pieces EP. Specifically, as shown in Fig. 7, a second transparent electrode TE2 formed of a plurality of densely-arranged second transparent electrode pieces EP2 and a first transparent electrode TE1 formed as a sheet-shaped electrode may face each other.

With this structure as well, the second transparent electrode pieces EP2 and portions of the first transparent electrode TE1 each facing a corresponding one of the second transparent electrode pieces EP2 form electrode-piece sets ST to hold the polymer-dispersed liquid crystal 11 therebetween to apply voltages to the polymer-dispersed liquid crystal 11. Moreover, depending on voltages applied to different ones of the second transparent electrode pieces EP2, different voltages are applied to different portions of the polymer-dispersed liquid crystal 11 (in short, as a result of different voltages being applied to the different ones of the second transparent electrode pieces EP2, different voltages are applied to the different portions of the polymer-dispersed liquid crystal 11 that are in contact with the different ones of the different second transparent electrode pieces EP2).

That is, the backlight unit 29 incorporating the liquid crystal unit UT including these electrode-piece sets ST is also an area-control backlight unit 29. In short, in the liquid crystal unit UT, the backlight unit 29 is an area-control backlight unit 29 as long as it is structured such that as at least one of the first and second transparent electrodes TE1 and TE2 is formed of a plurality of electrode pieces EP that are densely arranged in a plane and each of the plurality of electrode pieces EP is individually fed with a voltage.

Incidentally, in the case in which the LEDs 21 supply light to the polymer-dispersed liquid crystal 11 through a side surface thereof, the closer a portion of the polymer-dispersed liquid crystal 11 is to the LEDs 21, the larger quantity of light the portion receives. As a result, the closer a portion of the liquid crystal unit UT is to the LEDs 21, the larger quantity of light is outputted from the portion. On the other hand, the quantity of light outputted from a portion of the liquid crystal unit UT that is far away from the LEDs 21 tends to be small. That is, with a method (an edge light method) in which light is incident on a side surface of the liquid crystal unit UT, the backlight unit 29 is liable to output light that includes nonuniformity of brightness (nonuniformity of light-quantity).

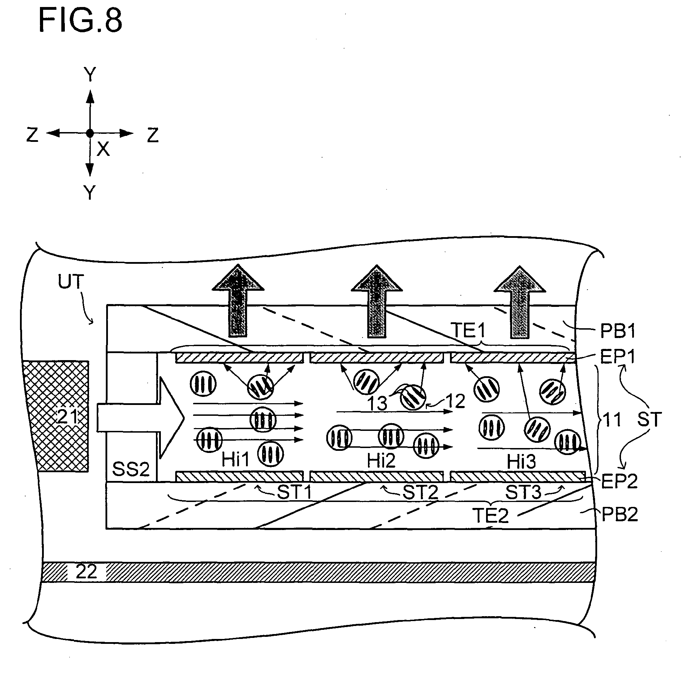

To prevent such nonuniformity of brightness, it is preferable that, as shown in Fig. 8, a voltage applied to one portion of polymer-dispersed liquid crystal be different from a voltage applied to another. Specifically, assuming that voltages that are applied to the polymer-dispersed liquid crystal 11 by the electrode-piece sets ST1 to ST3 are Hi1 to Hi3, the relationship between the values is indicated by Hi1 > Hi2 > Hi3.

Then, a comparatively high voltage Hi1 is applied to the portion of the polymer-dispersed liquid crystal 11 that is located between the electrode-piece set ST1 which is located the closest to the LEDs 21. As a result, in this portion of the polymer-dispersed liquid crystal 11, most of the linear liquid crystal molecules 13 are oriented along the electric field direction.

In this state, a comparatively large quantity of light is approximately perpendicularly incident on, and passes through, the liquid crystal molecules 13, and proceeds toward the portion of the polymer-dispersed liquid crystal 11 that is located between the electrode-piece set ST2 (see solid line arrows). As a result, only a small quantity of light is diffused at the portion of the polymer-dispersed liquid crystal 11 that is located between the electrode-piece set ST1 (see solid line arrows). Thus, in the portion of the liquid crystal unit UT that corresponds to the electrode-piece set ST1, output of an excessive quantity of light is prevented (see a black arrow).

On the other hand, light that has not been diffused at the portion of the polymer-dispersed liquid crystal 11 that is located between the electrode-piece set ST1 travels toward the portion of the polymer-dispersed liquid crystal 11 that is located between the electrode-piece set ST2. And, the voltage Hi2 that is applied to this portion of the polymer-dispersed liquid crystal 11 is lower than the voltage Hi1.

As a result, in the portion of the polymer-dispersed liquid crystal 11 that is located between the electrode-piece set ST2, the liquid crystal molecules 13 are less likely to be oriented along the electric field direction, compared with in the portion of polymer-dispersed liquid crystal 11 that is located between the electrode-piece set ST1. Accordingly, in the portion of the polymer-dispersed liquid crystal 11 that is located between the electrode-piece set ST2, light is more likely to be diffused (see solid line arrows) compared with in the portion of the polymer-dispersed liquid crystal 11 that is located between the electrode-piece set ST1.

However, the quantity of light that enters the portion of the polymer-dispersed liquid crystal 11 that is located between the electrode-piece set ST2 is smaller than the quantity of light that enters the portion of the polymer-dispersed liquid crystal 11 that is located between the electrode-piece set ST1. As a result, even though light is more likely to be diffused at the portion of the polymer-dispersed liquid crystal 11 that is located between the electrode-piece set ST2 than in the portion of the polymer-dispersed liquid crystal 11 that is located between the electrode-piece set ST1, the quantity of light that is outputted from the portion of the polymer-dispersed liquid crystal 11 that is located between the electrode-piece set ST2 and the quantity of light that is outputted from the portion of the polymer-dispersed liquid crystal 11 that is located between the electrode-piece set ST1 are likely to be on a same order (see black arrows).

The same phenomenon observed with respect to the portion of the polymer-dispersed liquid crystal 11 that is located between the electrode-piece set ST2 and the portion of the polymer-dispersed liquid crystal 11 that is located between the electrode-piece set ST1 is also observed with respect to the portion of the polymer-dispersed liquid crystal 11 that is located between the electrode-piece set ST2 and the portion of the polymer-dispersed liquid crystal 11 that is located between the electrode-piece set ST3.

That is, light that has not been diffused at the portion of the polymer-dispersed liquid crystal 11 that is located between the electrode-piece set ST2 travels toward the portion of the polymer-dispersed liquid crystal 11 that is located between the electrode-piece set ST3. Then, the light is diffused by the liquid crystal molecules 13 of the portion of the polymer-dispersed liquid crystal 11 to which is applied the voltage Hi3 which is lower than the voltage Hi2, and then the light is outputted to the outside.

However, the quantity of light that enters the portion of the polymer-dispersed liquid crystal 11 that is located between the electrode-piece set ST3 is smaller than the quantity of light that enters the portion of the polymer-dispersed liquid crystal 11 that is located between the electrode-piece set ST2, and thus the quantity of light outputted from this portion of the polymer-dispersed liquid crystal 11 is not excessively large (see a black arrow). As a result, the quantity of light that is outputted from the portion of the polymer-dispersed liquid crystal 11 that is located between the electrode-piece set ST3 is likely to be on the same order as the quantity of light that is outputted from the portion of the polymer-dispersed liquid crystal 11 that is located between the electrode-piece set ST2.

In light of the foregoing, if the voltage applied to the polymer-dispersed liquid crystal 11 is higher closer to the LEDs 21, the quantity of light that is diffused by the liquid crystal molecules 13 is reduced. On the other hand, the higher the voltage applied to a portion of the polymer-dispersed liquid crystal 11 in which light from the LEDs 21 travels is, the more the light that travels in the polymer-dispersed liquid crystal 11 is likely to proceed away from the LEDs 21.

Thus, in the backlight unit 29 incorporating the liquid crystal unit UT including the polymer-dispersed liquid crystal 11 featured as described above, the quantity of light outputted from a portion of the liquid crystal unit UT that is close to the LEDs 21 does not increase to excess, and as a result, backlight light does not include brightness nonuniformity (needless to say, if the backlight light does not include brightness nonuniformity, an image displayed on the liquid crystal display panel 39 does not include brightness nonuniformity, either).

The method for preventing brightness nonuniformity is not limited to nonuniform application of voltage to the polymer-dispersed liquid crystal 11. For example, brightness nonuniformity can be prevented by controlling the density of the liquid crystal 12 in the polymer 14.

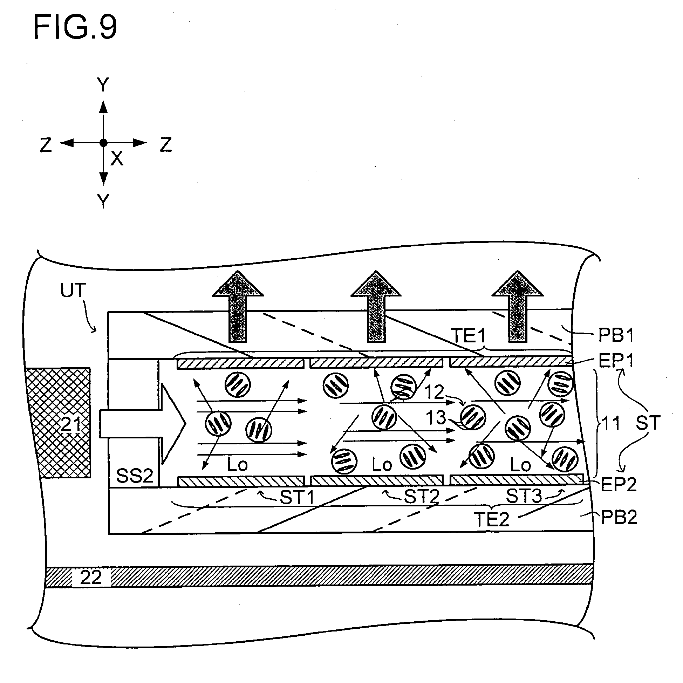

That is, the density of the liquid crystal 12 is not uniform (incidentally, the density of the liquid crystal 12 is set when the material is initially adjusted). Specifically, as shown in Fig. 9, the density of the liquid crystal 12 is set such that the closer a portion of the polymer-dispersed liquid crystal 11 is to the LEDs 21, the lower the density of the liquid crystal 12 included in the portion is (in other words, the farther a portion of the polymer-dispersed liquid crystal 11 is away from the LEDs 21, the higher the density of the liquid crystal 12 included in the portion is).

Of portions of the polymer-dispersed liquid crystal 11 located between the electrode-piece sets ST1 to ST3 to which comparatively low voltages are applied, the portion that is located between the electrode-piece set ST1 that is closest to the LEDs 21 includes the lowest density of liquid crystal 12, and thus the quantity of light diffused by the liquid crystal molecules 13 is comparatively small (see solid line arrows). This prevents an excessive quantity of light from being outputted from the portion of the liquid crystal unit UT corresponding to the electrode-piece set ST1 (see a black arrow).

On the other hand, light that has not been diffused at the portion of the polymer-dispersed liquid crystal 11 that is located between the electrode-piece set ST1 travels toward the portion of the polymer-dispersed liquid crystal 11 that is located between the electrode-piece set ST2. The density of the liquid crystal 12 in this portion of the polymer-dispersed liquid crystal 11 is higher than that in the portion of the polymer-dispersed liquid crystal 11 that is located between the electrode-piece set ST1. Thus, light is more likely to be diffused at the portion of the polymer-dispersed liquid crystal 11 that is located between the electrode-piece set ST2 than at the portion of the polymer-dispersed liquid crystal 11 that is located between the electrode-piece set ST1 (see solid line arrows).

However, the quantity of light that enters the portion of the polymer-dispersed liquid crystal 11 that is located between the electrode-piece set ST2 is smaller than the quantity of light that enters the portion of the polymer-dispersed liquid crystal that is located between the electrode-piece set ST1. Thus, even though the portion of the polymer-dispersed liquid crystal 11 that is located between the electrode-piece set ST2 is more likely to diffuse light than the portion of the polymer-dispersed liquid crystal 11 that is located between the electrode-piece set ST1, the quantity of light that is outputted from the portion of the polymer-dispersed liquid crystal 11 that is located between the electrode-piece set ST2 is likely to be on the same order as the quantity of light that is outputted from the portion of the polymer-dispersed liquid crystal 11 that is located between the electrode-piece set ST1(see a black arrow).

The same phenomenon observed with respect to the portion of the polymer-dispersed liquid crystal 11 that is located between the electrode-piece set ST2 and the portion of the polymer-dispersed liquid crystal 11 that is located between the electrode-piece set ST1 is also observed with respect to the portion of the polymer-dispersed liquid crystal 11 that is located between the electrode-piece set ST2 and the portion of the polymer-dispersed liquid crystal 11 that is located between the electrode-piece set ST3.

That is, light that has not been diffused at the portion of the polymer-dispersed liquid crystal 11 that is located between the electrode-piece set ST2 travels toward the portion of the polymer-dispersed liquid crystal 11 that is located between the electrode-piece set ST3, where the light is diffused by the dense liquid crystal 12 (the liquid crystal 12 having a density higher than the density of the liquid crystal 12 in the portion of the polymer-dispersed liquid crystal 11 that is located between the electrode-piece set ST2) to be outputted outward.

However, the quantity of light that enters the portion of the polymer-dispersed liquid crystal 11 that is located between the electrode-piece set ST3 is smaller than the quantity of light that enters the portion of the polymer-dispersed liquid crystal 11 that is located between the electrode-piece set ST2, and thus the quantity of light outputted from this portion of the polymer-dispersed liquid crystal 11 is not excessively large (see a black arrow). As a result, the quantity of light that is outputted from the portion of the polymer-dispersed liquid crystal 11 that is located between the electrode-piece set ST3 is likely to be on the same order as the quantity of light that is outputted from the portion of the polymer-dispersed liquid crystal 11 that is located between the electrode-piece set ST2.

In light of the foregoing, if the density of the liquid crystal 12 with respect to the polymer 14 in the polymer-dispersed liquid crystal 11 is lower toward the LEDs 21, the quantity of light that is diffused by the liquid crystal molecules 13 is reduced. On the other hand, the lower the density of the liquid crystal 12 is, the more the light traveling in the polymer-dispersed liquid crystal 11 is likely to travel away from the LEDs 21.

Thus, in the backlight unit 29 incorporating the liquid crystal unit UT including the above-described polymer-dispersed liquid crystal 11, like in the case in which voltages applied to the polymer-dispersed liquid crystal 11 are not uniform, the quantity of light outputted from a portion of the liquid crystal unit UT that is close to the LEDs 21 does not increase to excess, and as a result, the backlight light is uniformly bright.

Incidentally, a backlight unit 29 using both the control of the density of the liquid crystal 12 with respect to the polymer 14 and the control of the voltage applied to the electrode-piece sets ST is also capable of preventing backlight light from including brightness nonuniformity.

### [Embodiment 2]

Embodiment 2 will now be described. Here, such members as function similarly to their counterparts in Embodiment 1 are identified by common reference signs and no description of them will be repeated.

Embodiment 1 adopts the liquid crystal unit UT as a member that guides light from the LEDs 21 in the backlight unit 29. It is possible to use the liquid crystal unit UT also as a liquid crystal display panel 39 in a liquid crystal display device 49.

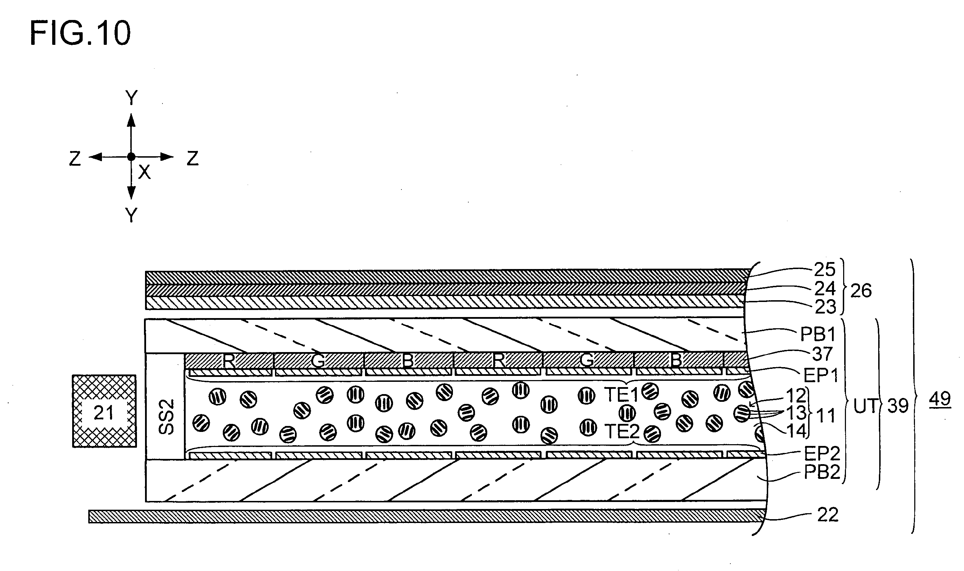

An example of such a liquid crystal display device 49 is one that uses the liquid crystal unit UT as a liquid crystal display panel 39, as shown in the sectional view of Fig. 10. As shown in Fig. 10, the liquid crystal display device 49 includes the liquid crystal unit UT as the liquid crystal display panel 39, LEDs 21, a reflection sheet 22, and an optical sheet group 26.

Like the liquid crystal display panel 39 described in Embodiment 1, the liquid crystal unit UT also adopts an active matrix method. Thus, in the liquid crystal unit UT, a second light-transmitting substrate PB2 to which active elements such as TFTs (not shown in Fig. 10) are fitted and a first light-transmitting substrate PB1 are arranged facing each other to hold a polymer-dispersed liquid crystal 11 therebetween.

On a side of the second light-transmitting substrate PB2 that faces the first light-transmitting substrate PB1, there are formed gate signal lines and source signal lines (both of which are not illustrated in Fig. 10) that are connected to the TFTs, and further a second transparent electrode TE2 is formed. In addition, like in Embodiment 1, regions divided by the gate signal lines and the source signal lines correspond to pixels of the liquid crystal display panel 39, and the TFTs are arranged one at an intersection point of a gate signal line and a source signal line to control the ON/OFF state of a corresponding one of the pixels of the liquid crystal display panel 39.

The second transparent electrode TE2 includes a plurality of second transparent electrode pieces EP2. The second transparent electrode pieces EP2 are each an electrode connected to a drain of a corresponding one of the TFTs, and arranged corresponding to the pixels on a one-to-one basis (that is, the second transparent electrode pieces EP2 are laid in a matrix state all over the second light-transmitting substrate PB2). The second transparent electrode TE2 formed of the densely-arranged second transparent electrode pieces EP2 and the first transparent electrode TE1 of the first light-transmitting substrate PB1 hold the polymer-dispersed liquid crystal 11 therebetween.

On a side of the first light-transmitting substrate PB1 that faces the second light-transmitting substrate PB2, there are formed a first transparent electrode TE1 and a color filter 37.

Like the second transparent electrode TE2, the first transparent electrode TE1 includes a plurality of first transparent electrode pieces EP1, and the first transparent electrodes EP1 are arranged corresponding to the pixels on a one-to-one basis. Thus, the first transparent electrode pieces EP1 are laid in a matrix state all over the first light-transmitting substrate PB1.

The first transparent electrode TE1 formed of the densely-arranged first transparent electrode pieces EP1 and the second transparent electrode TE2 of the second light-transmitting substrate PB2 holds the polymer-dispersed liquid crystal 11 therebetween (in short, a first transparent electrode piece EP1 is superposed on a second transparent electrode piece EP2, and the second transparent electrode piece EP2 and the first transparent electrode piece EP1 which face each other correspond to a pixel). As a result, when a potential difference is generated between the first transparent electrode TE1 and the second transparent electrode TE2, by using the potential difference (applied voltage), the orientation of the liquid crystal molecules 13 of the polymer-dispersed liquid crystal 11 is controlled.

The color filter 37 is a filter that is interposed between the first transparent electrode TE1 and the first light-transmitting substrate PB1 to transmit light of a specific color. Like in Embodiment 1, the color filter 37 is, for example, formed of color filters 37 that each transmit light of red (R), green (G) or blue (B), which colors are the light's three primary colors.

In the above-described liquid crystal unit UT, when a TFT is turned on by a gate signal voltage fed thereto via a gate signal line, a source signal voltage at a source signal line is fed to the second transparent electrode TE2 via a source and a drain of the TFT. Then, according to the source signal voltage, the voltage of the source signal is written onto part of the polymer-dispersed liquid crystal 11 that is located between the second transparent electrode TE2 and the first transparent electrode TE1, that is, part of the polymer-dispersed liquid crystal 11 that corresponds to the pixel. On the other hand, when the TFT is in an OFF state, the source signal voltage remains held by the polymer-dispersed liquid crystal 11 and a capacitor (not shown).

The LEDs 21 face a side surface of the above-described liquid crystal unit UT, and supply light to the polymer-dispersed liquid crystal 11 through a space between the first light-transmitting substrate PB1 and a second light-transmitting substrate PB2.

The reflection sheet 22 is located so as to be covered with the second transparent substrate PB2 in the liquid crystal unit UT. And, like in Embodiment 1, the reflection surface reflects light that passes through the second light-transmitting substrate PB2 and that is liable to leak out of the liquid crystal unit UT, to thereby make the light travel back into the liquid crystal unit UT.

The optical sheet group 26 (a diffusion sheet 23, lens sheets 24 and 25) covers the first light-transmitting substrate PB1 in the liquid crystal unit UT, and diffuses light (planar light) that is outputted from the liquid crystal unit UT, to deliver the light to every portion of the liquid crystal display panel 49 to thereby achieve enhanced brightness.

In a liquid crystal display device 69 provided with the above-described liquid crystal unit UT, light from the LEDs 21 first enters the polymer-dispersed liquid crystal 11. And the quantity of light that is outputted from the polymer-dispersed liquid crystal 11 varies according to the voltage applied to the polymer-dispersed liquid crystal 11 by the first and second transparent electrodes TE1 and TE2.

That is, like in Embodiment 1, when a comparatively high voltage is applied to the polymer-dispersed liquid crystal 11 by the first and second transparent electrodes TE1 and TE2, linear liquid crystal molecules 13 are oriented along an electric field direction, and most part of light is approximately perpendicularly incident on, and passes through, the liquid crystal molecules 13. As a result, a comparatively small quantity of light is diffused by the liquid crystal molecules 13, and this results in output of a small quantity of light outward from the polymer-dispersed liquid crystal 11.

In contrast, when a comparatively low voltage (including a zero voltage) is applied to the polymer-dispersed liquid crystal 11 by the first and second transparent electrodes TE1 and TE2, the linear liquid crystal molecules 13 are randomly oriented, and most part of light is obliquely incident on the randomly oriented liquid crystal molecules 13 and diffused. As a result, a comparatively large quantity of light is diffused by the liquid crystal molecules 13, and this results in output of a large quantity of light outward from the polymer-dispersed liquid crystal 11.

Incidentally, part of light that has been diffused by the liquid crystal molecules 13 is outputted from the second light-transmitting substrate PB2 toward the reflection sheet 22, by which the light is reflected back into the liquid crystal unit UT through the second light-transmitting substrate PB2 to pass through the first light-transmitting substrate PB1 and proceed to the diffusion sheet 23.

In light of the foregoing, the following can be said. That is, even in the case in which the liquid crystal unit UT is used as the liquid crystal panel 39, the behavior of light in the polymer-dispersed liquid crystal 11 is the same as in Embodiment 1.

That is, use of the above-described liquid crystal unit UT as the liquid crystal display panel 39 makes it possible to control the quantity of light that travels outward from the liquid crystal unit UT in accordance with the level of the voltage applied to the polymer-dispersed liquid crystal 11. In addition, since the quantity of the planar light outputted from the liquid crystal unit UT is controlled portion by portion in the plane (pixel by pixel) like in Embodiment 1, the liquid crystal display panel 39 is an area-control liquid crystal display panel 39 capable of achieving complex image display.

In addition, like in Embodiment 1, nonuniformity of brightness is prevented by controlling the density of the liquid crystal 12 in the polymer-dispersed liquid crystal 11 or by controlling the voltage applied through the electrode-piece set ST. In short, the liquid crystal display device 49 of Embodiment 2 offers the same operation effect as the liquid crystal display device 49 described in Embodiment 1.

Moreover, use of the liquid crystal unit UT as the liquid crystal display panel 39 particularly helps improve the efficiency of effective use of light in the liquid crystal display device 49. For example, in the liquid crystal display device 49 incorporating the backlight unit 29 and the liquid crystal panel 39, light from the backlight unit 29 passes through the liquid crystal display panel 39 having transmissivity on the order of 3% to 10%. That is, the light from the backlight unit 29 is used at an efficiency of as low as on the order of 3% to 10%.

In contrast, in the liquid crystal display device 49 using the liquid crystal unit UT as the liquid crystal display panel 39, light outputted from the polymer-dispersed liquid crystal 11 as a result of diffusion by the liquid crystal molecules 13 passes through the optical sheet group 26 having comparatively high transmissivity, but does not have to pass through any member (for example, a conventional liquid crystal display panel) having extremely low transmissivity. This results in improved efficiency of effective use of light.

For example, the efficiency of effective use of light in the liquid crystal display device 49 using the liquid crystal unit UT as the liquid crystal display panel 39 is equal to or higher than the order of 10 to 33 times the efficiency of effective use of light in the liquid crystal display device 49 incorporating the backlight unit 29 and the liquid crystal display panel 39.

Furthermore, the liquid crystal display device 49 using the liquid crystal unit UT as the liquid crystal display panel 39 does not need to be provided with a backlight unit 29. Consequently, the liquid crystal display device 49 is formed of a reduced number of members, and thus can be produced at a lower cost.

In the above descriptions, the first transparent electrode TE1 is formed of the densely-arranged first transparent electrode pieces EP1, and the second transparent electrode TE2 is formed of the densely-arranged second transparent electrode pieces EP2. That is, the transparent electrodes TE1 and TE2 are built as a collection of the transparent electrode pieces EP1 and as a collection of the transparent electrode pieces EP2, respectively. This, however, is not meant as a limitation like in Embodiment 1.

That is, the liquid crystal unit UT is an area-control liquid crystal display panel 39 as long as at least one of the first and second transparent electrodes TE1 and TE2 is formed of a plurality of electrode pieces EP densely arranged in a plane and each of the plurality of electrode pieces EP is independently fed with a voltage.

### [Other Embodiments]

It should be understood that the embodiments specifically described above are not meant to limit the present invention, and that many variations and modifications can be made within the spirit of the present invention.

For example, in the liquid crystal display device 49 using the liquid crystal unit UT as the liquid crystal display panel 39, the optical sheet group 26 covers the first light-transmitting substrate PB1 of the liquid crystal unit UT as shown in Fig. 10. This is because the presence of such an optical sheet group 26 helps improve the brightness of light outputted from the liquid crystal unit UT. However, in the liquid crystal display device 49 shown in Fig. 10, the optical sheet group 26 may be omitted if the light itself outputted from the liquid crystal unit UT has sufficient brightness (note that such a liquid crystal display device 49 can be formed of a reduced number of members).

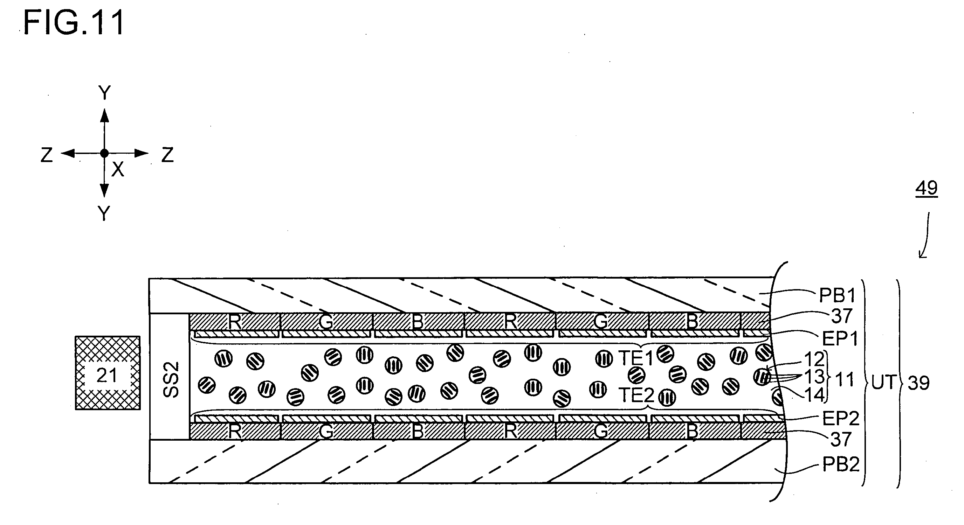

Furthermore, in the liquid crystal display device 49 shown in Fig. 10, the user views the first light-transmitting substrate PB1 side of the liquid crystal unit UT (incidentally, this type of liquid crystal display device 49 is referred to as a single-sided liquid crystal display device 49). However, the liquid crystal display device 49 may be structured as shown in Fig. 11.

That is, the liquid crystal display device 49 may be dual-sided such that the first light-transmitting substrate PB 1 side and the second light-transmitting substrate PB2 side of the liquid crystal unit UT are viewable to the user (incidentally, a color filter 37 is preferably interposed between the second transparent electrode TE2 and the second light-transmitting substrate PB2 as well).

Furthermore, in a case in which the above-described liquid crystal display device 49 is not required to perform color display, the color filter 37 may be omitted. The above descriptions deal with the LEDs 21 as an example of a light source, but this is not meant as a limitation. For example, the light source may be a light source such as a fluorescent tube (a cold cathode tube or a hot cathode tube) or a light source formed with a light-emitting material such as an organic EL (electroluminescence) material or a nonorganic EL material.

### List of Reference Symbols

- UT: liquid crystal unit
- 11: polymer-dispersed liquid crystal
- 12: liquid crystal
- 13: liquid crystal molecule
- 14: polymer
- PB: light-transmitting substrate
- PB1: first light-transmitting substrate (first substrate)
- PB2: second light-transmitting substrate (second substrate)
- ST: electrode set
- TE: transparent electrode
- TE1: first transparent electrode (first electrode)
- TE2: second transparent electrode (second electrode)
- EP: transparent electrode piece (electrode piece)
- EP1: first transparent electrode piece
- EP2: second transparent electrode piece
- 21: LED (light source)
- 22: reflection sheet
- 23: diffusion sheet
- 24: lens sheet
- 25: lens sheet
- 29: backlight unit (light quantity control device)
- 31: TFT
- 32: active matrix substrate
- 33: counter substrate
- 34: liquid crystal
- GL: gate signal line
- SL: source signal line
- 35: pixel electrode
- 36: common electrode
- 37: color filter
- 39: liquid crystal display panel (light quantity control device)
- 49: liquid crystal display device (light quantity control device, electronic device).

## Claims

1. A light quantity control device, comprising:
a first substrate including a first electrode to which a voltage is applied;
a second substrate including a second electrode to which a voltage is applied;
polymer-dispersed liquid crystal that is placed between the first electrode and the second electrode, and in which, in response to an increase of an applied voltage, liquid crystal molecules are made to be uniformly oriented along a direction of an electric field between the first electrode and the second electrode; and
a light source that supplies light to the polymer-dispersed liquid crystal through a space between the first electrode and the second electrode.

2. The light quantity control device of claim 1,
wherein at least one of the first electrode and the second electrode includes a plurality of electrode pieces that are arranged densely in a plane, and
wherein the plurality of electrode pieces each individually have a voltage applied thereto.

3. The light quantity control device of claim 2,
wherein a voltage applied to the polymer-dispersed liquid crystal is higher toward the light source.

4. The light quantity control device of any one of claims 1 to 3,
wherein liquid crystal density with respect to polymer in the polymer-dispersed liquid crystal is lower toward the light source.

5. The light quantity control device of any one of claims 1 to 4 that is built as a backlight unit that supplies light to a liquid crystal display panel.

6. The light quantity control device of any one of claims 1 to 4 that is built as a liquid crystal display panel.

7. A liquid crystal display device, comprising: the backlight unit of claim 5; and a liquid crystal display panel that receives light from the backlight unit.

8. A liquid crystal display device comprising the liquid crystal display panel of claim 6.
